# EUROPEAN PATENT SPECIFICATION

(11) **EP 4 394 252 B1**
(45) Date of publication and mention of the grant of the patent: **20.08.2025**
(21) Application number: 22217311.4
(22) Date of filing: 30.12.2022
(51) Int. Cl.: F23R 3/34, F23R 3/36, F23R 3/26, F23C 6/04

(54) **METHOD FOR CONTROLLING A SEQUENTIAL COMBUSTOR OF A GAS TURBINE ENGINE AND GAS TURBINE POWER PLANT**
VERFAHREN ZUR STEUERUNG EINER SEQUENZIELLEN BRENNKAMMER EINES GASTURBINENTRIEBWERKS UND GASTURBINENKRAFTWERK
PROCÉDÉ DE COMMANDE D'UNE CHAMBRE DE COMBUSTION SÉQUENTIELLE D'UN MOTEUR À TURBINE À GAZ ET CENTRALE À TURBINE À GAZ

(43) Date of publication of application: 03.07.2024
(73) Proprietor: Ansaldo Energia Switzerland AG, 5400 Baden (CH)
(72) Inventor: CIANI, Andrea, 5400 BADEN (CH); DUESING, Michael Klaus, 5400 BADEN (CH); SIERRA SANCHEZ, Patricia, 5400 BADEN (CH)
(74) Representative: Studio Torta S.p.A.

(56) References cited:
- EP-A1- 3 772 615
- EP-A2- 4 001 618
- US-A1- 2005 026 095
- US-A1- 2020 018 231
- US-A1- 2021 180 250
- US-B1- 6 201 029

## Description

### TECHNICAL FIELD

The present invention relates to a method for controlling a sequential combustor of a gas turbine engine and to a gas turbine power plant.

### BACKGROUND

As is known, ammonia is a promising fuel that may be used to run gas turbine engines and provide a strong contribution to decarbonization. Combustion of ammonia is in fact completely carbon free, on the one side, and, on the other side, ammonia is an energy dense fuel suitable for efficient and durable storage of large amounts of chemical energy. Required volume may be remarkably low, for example compared to hydrogen, because ammonia is rather easy to liquefy and can be kept in the liquid state under relatively low pressure even at environmental temperature. Thus, not only storage, but also transportation and distribution may be made efficient, safe and cost-effective.

However, combustion of ammonia in ordinary operating conditions of gas turbine engines is known to produce significant amounts of nitrogen oxides (NOx). Emissions of NOx are critical and need to be minimized as well as emissions of carbon monoxide. Also blends of ammonia and carbon based fuels such as natural gas or methane may not meet current strict requirements for NOx emissions if directly supplied to gas turbine engines. The benefit of carbon free or at least low-carbon combustion may be thus cancelled by a corresponding increase in NOx emissions.

Moreover, reactivity of ammonia is relatively low and represents another hurdle that makes use of ammonia in gas turbine engines difficult.

In other words, gas turbine engines as normally operated are not compatible with feed of ammonia as the sole fuel or as a component of a mixture of different fuels.

US 2020/018231 A1 discloses a method for controlling a sequential combustor of a gas turbine engine, comprising a first combustor stage and a second combustor stage. The method comprising supplying the first combustor stage with a first air/fuel mixture (M1) and supplying the second combustor stage with a second air/fuel mixture (M2). The first air/fuel mixture (M1) contains ammonia and is stoichiometric or sub-stoichiometric.

Other examples of known methods are disclosed in EP 3 772 615 A1, in EP 4 001 618 A2, in US 2005/026095 A1 and in US 2021/180250 A1.

### SUMMARY OF THE INVENTION

It is an aim of the present invention to provide a method for controlling a sequential combustor of a gas turbine engine and a gas turbine power plant that allow the above limitations to be overcome or at least reduced.

According to the present invention, there is provided a method for controlling a sequential combustor of a gas turbine engine, the sequential combustor comprising a first combustor stage and a second stage;
the method comprising supplying the first combustor stage of the sequential combustor with a first air/fuel mixture (M1) and supplying the second stage of the sequential combustor with a second air/fuel mixture;
the first air/fuel mixture contains ammonia and is stoichiometric or sub-stoichiometric;
characterized by supplying dilution air into the sequential combustor between the first combustor stage and the second combustor stage, at a location where unburnt ammonia from the first combustor stage is decomposed.

The supply of an excess of ammonia with respect to air oxygen prevents or at least strongly reduces the formation of nitrogen dioxides, which is instead a major problem in conventional engines operated on lean air/fuel mixtures containing ammonia. Moreover, residual ammonia is thermally decomposed into molecular nitrogen N₂ and molecular hydrogen H₂, which are therefore suitable for resuming the combustion without increasing the production of NOx.

The solution thus allows to exploit advantages of ammonia as a fuel for gas turbine engines and its potential contribution to decarbonization, without incurring in adverse effects such as high NOx emission levels. Advantages of ammonia to other carbon-free fuels mainly reside in ease of storage and transportation in amounts sufficient to meet the need of the market.

Heat in the first combustor stage causes the residual ammonia which has not taken part to first stage combustion to be thermally decomposed into molecular nitrogen N₂ and molecular hydrogen H₂, which are available to resume combustion in the presence of additional oxygen. Injection of dilution air at a location where molecular ammonia has been decomposed and is no longer present, or is present in a negligible amount, determines the conditions for resuming the combustion without causing critical production of NOx. Together with control of the amount of the first fuel supplied to the first combustor stage combustion, injection of dilution air allows also to control the temperature of the gas at the inlet of the second combustor stage.

According to an aspect of the invention, a fuel content of the first air/fuel mixture is entirely ammonia.

Completely carbon-free combustion is thus ensured, without the drawbacks associated with supplying other fuels which are not as easy and safe to store and distribute as ammonia (e.g. direct supply of molecular hydrogen).

According to an aspect of the invention, the method comprises decomposing additional ammonia outside the sequential combustor.

According to an aspect of the invention, the method comprises supplying the decomposed additional ammonia to the second combustor stage in the second air/fuel mixture.

Decomposition of additional ammonia outside the sequential combustor and feed of such decomposed additional ammonia to the second combustor stage create the conditions for running the gas turbine engine on ammonia alone, if so desired, without incurring in excessive production of NOx.

According to an aspect of the invention, the second air/fuel mixture contains at least one of hydrogen, methane, ethane, propane, butane pentane and any other gaseous fuel.

A conventional fuel, such as natural gas or syngas, may be used in the second combustor stage of the sequential combustor for hybrid operation of the gas turbine engine.

According to an aspect of the invention, the second air/fuel mixture (M2) is over-stoichiometric (lean).

If hydrocarbons are present in the second fuel (e.g. natural gas or syngas), the excess of oxygen allows to keep production of carbon monoxide very low. Instead, in case products of ammonia decomposition are burned, the absence of molecular ammonia prevents critical production of NOx even in a lean air/fuel mixture.

According to an aspect of the invention, the method comprises controlling a temperature of a first stage flame, an equivalence ratio of the first stage and a fuel massflow of the first stage so that the second air/fuel mixture is auto-ignited in the second combustor stage.

According to the present invention, there is also provided a gas turbine power plant comprising:
a gas turbine engine, provided with a sequential combustor having a first combustor stage and a second combustor stage;
a first fuel source coupled to the first combustor stage and providing a first fuel;
a second fuel source coupled to the second combustor stage and providing a second fuel;
a control system, configured to control fuel supply to the first combustor stage and to the second combustor stage, whereby a first air/fuel mixture containing the first fuel is supplied to the first combustor stage and a second air/fuel mixture containing the second fuel is supplied to the second combustor stage;
wherein the first fuel contains ammonia and the control system is configured to control supply of the first fuel so that the first air/fuel mixture is stoichiometric or sub-stoichiometric;
characterized by a mixer (16) configured to add dilution air along a flow path between the first combustor stage and the second combustor stage, at a location where unburnt ammonia from the first combustor stage is decomposed.

According to an aspect of the invention, a content of the first air/fuel mixture is entirely ammonia.

According to an aspect of the invention, the second fuel source comprises a reactor coupled to the first fuel source to receive the first fuel and configured to decompose ammonia in the first fuel and to feed the decomposed ammonia to the second combustor stage as the second fuel.

According to an aspect of the invention, the second fuel contains at least one of hydrogen, methane, ethane, propane, butane, pentane or any other gaseous fuel.

According to an aspect of the invention, the second air/fuel mixture is over-stoichiometric.

According to an aspect of the invention, the control system is configured to control at least one of a temperature of a first stage flame, an equivalence ratio of the first stage and a fuel massflow of the first stage so that the second air/fuel mixture is auto-ignited in the second combustor stage.

### BRIEF DESCRIPTION OF THE DRAWINGS

The present invention will now be described with reference to the accompanying drawings, which show a number of non-limitative embodiments thereof, in which:
- figure 1 is a simplified block diagram of a gas turbine engine in accordance with an embodiment of the present invention;
- figure 2 is a schematic view of a portion of the gas turbine engine of figure 1;
- figure 3 is a simplified block diagram of a gas turbine engine in accordance with another embodiment of the present invention;
- figure 4 is a schematic view of a portion of the gas turbine engine of figure 3;
- figure 5 is a simplified block diagram of a gas turbine engine in accordance with a further embodiment of the present invention;
- figure 6 is a schematic view of a portion of the gas turbine engine of figure 5.

### DETAILED DESCRIPTION OF EXEMPLARY EMBODIMENTS

In the following, when dealing with mixtures of fuel and air, reference will be made to the air-to-fuel ratio λ. Therefore, the terms "sub-stoichiometric" and "over-stoichiometric" will be in any case understood as meaning an excess of fuel and an excess of air in the mixture, respectively, compared to the stoichiometric ratio λ_{ST}.

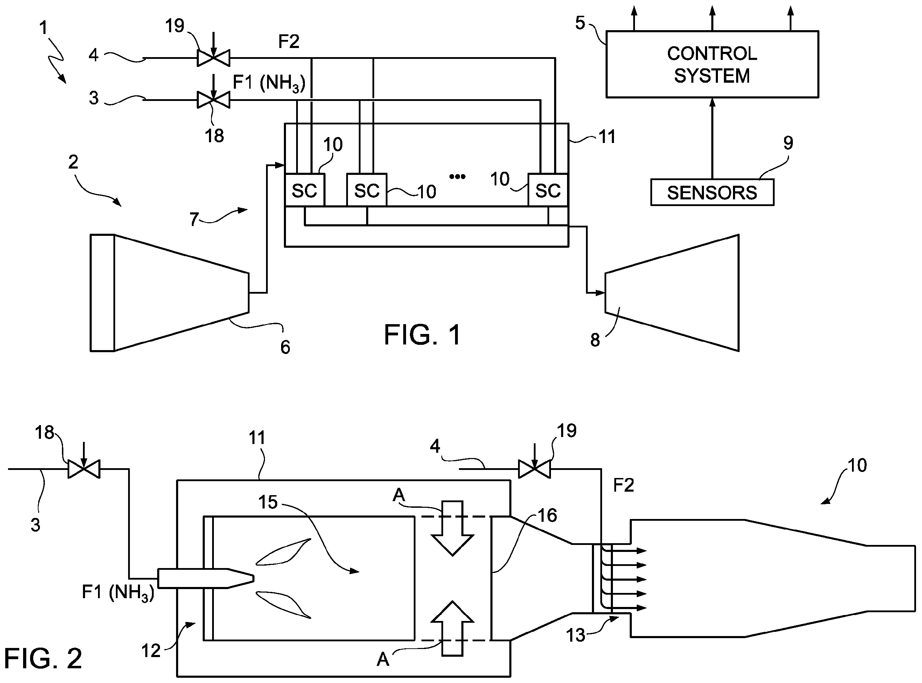

With reference to Figure 1, number 1 defines a gas-turbine plant as a whole comprising a gas turbine engine 2, a first fuel supply line 3, second fuel supply line 4 a control system 5.

The control system 5 is configured to determine set-points of the gas turbine engine 2 for desired operating conditions and to use actuators of the gas turbine engine 2, so that set-points may be achieved.

The gas turbine engine 2, in turn, comprises a compressor 6, a combustor assembly 7 and an expansion section or turbine 8. Moreover, sensors 9 are arranged and configured to sense operating quantities of the gas turbine engine 2 and to send measurement signals to the control system 5.

The compressor 6 feeds the combustor assembly 7 with a flow of air drawn from outside.

The combustor assembly 7 comprises a plurality of sequential combustors 10, which cause the combustion of mixtures of air and fuel. An air plenum 11, coupled to the sequential combustors 10, is supplied with compressed air by the compressor 6 and defines a compressed air source for the sequential combustors 10.

The turbine 8 receives and expands a flow of burnt hot gas from the combustor assembly 7 to extract mechanical work, which is transferred to an external user, typically an electric generator, which is not shown here.

The first supply line 3 supplies a first fuel F1, which contains molecular ammonia and in one embodiment is sole ammonia.

The second supply line 4 supplies a second fuel F2, which contains one of hydrogen and methane or a mixture thereof. For example, the second fuel F2 may be natural gas or syngas and contain one or more of ethane, propane, butane, pentane or any other gaseous fuel.

Figure 2 schematically shows one of the sequential combustors 10, being it understood that the other sequential combustors 10 have basically an identical structure.

The sequential combustor 10 comprises a first combustor stage 12 and a second combustor stage 13, sequentially arranged along a gas flow path 15. A mixer 16 is arranged along the gas flow path 15 between the first combustor stage 12 and the second combustor stage 13 and is configured to add a controlled amount of dilution air A into gas flowing through the gas flow path 15.

The first combustor stage 12 is fluidly coupled to the first fuel supply line 3 to receive an amount of the first fuel F1, which is adjustable by a first stage fuel actuator 18, e.g. a fuel valve system. The first combustor stage 12 also receives an airflow from the plenum 11, which is in turn fed by the compressor 6. The first fuel F1 and the airflow from the plenum 11 form a first air/fuel mixture M1 which is burned in the first combustor stage 12. The amount of first fuel F1 is controlled by the control system 5 through the first stage fuel actuator 18 so that the first air/fuel mixture M1 is stoichiometric or sub-stoichiometric (rich) for the first fuel F1. Under both stoichiometric or sub-stoichiometric conditions, only part of the ammonia in the first fuel F1 is burned in the first combustor stage 12 and rate of production of NOx can be kept low, within acceptable limits. The remaining portion, which is not burned because there is no sufficient oxygen available, is thermally decomposed (or cracked) into molecular nitrogen N₂ and molecular hydrogen H₂. Therefore no or negligible molecular ammonia NH₃ is any longer present in the mixture that leaves the first combustor stage 12. In particular, at the location where the mixer 16 adds dilution air A into gas flowing through the gas flow path 15 ammonia has been burned or decomposed. Injection of air causes the temperature of gas to drop. However, oxidation of decomposed ammonia resumes downstream of the mixer 16 and the temperature starts rising soon after, until the mixture of dilution air A and exhaust from the first combustor stage 12 reaches the second combustor stage 13.

The second combustor stage 13 is fluidly coupled to the second fuel supply line 4 to receive an amount of the second fuel F2, which is adjustable by a second stage fuel actuator 19, e.g. a fuel valve system. The second fuel F2 from the second fuel supply line 4 is added to the mixture of dilution air A and exhaust from the first combustor stage 12 flowing through the gas flow path 15 to form a second air/fuel mixture M2. Thus, a fuel content of the second air/fuel mixture M2 may include hydrogen and nitrogen from first combustor stage 12 and the second fuel F2 from the second fuel supply line 4. No or negligible amount of undecomposed ammonia is present in the second air/fuel mixture M2.

The amount of second fuel F2 is controlled by the control system 5 through the second stage fuel actuator 19 so that the second air/fuel mixture M2 is over-stoichiometric (lean).

The control system 5 also controls at least one of a temperature of a first stage flame in the first combustor stage 12, an equivalence ratio of the first stage and a fuel massflow of the first stage and the feed of the dilution air A through the mixer 16 so that the second air/fuel mixture M2 is auto-ignited in the second combustor stage 13 and a flame front position of the second combustor stage 13 is adjusted as desired. As already mentioned, in fact, the dilution air A determines both temperature drop of the gas flowing from the first combustor stage and temperature rise due to reactivation of combustion of decomposed ammonia.

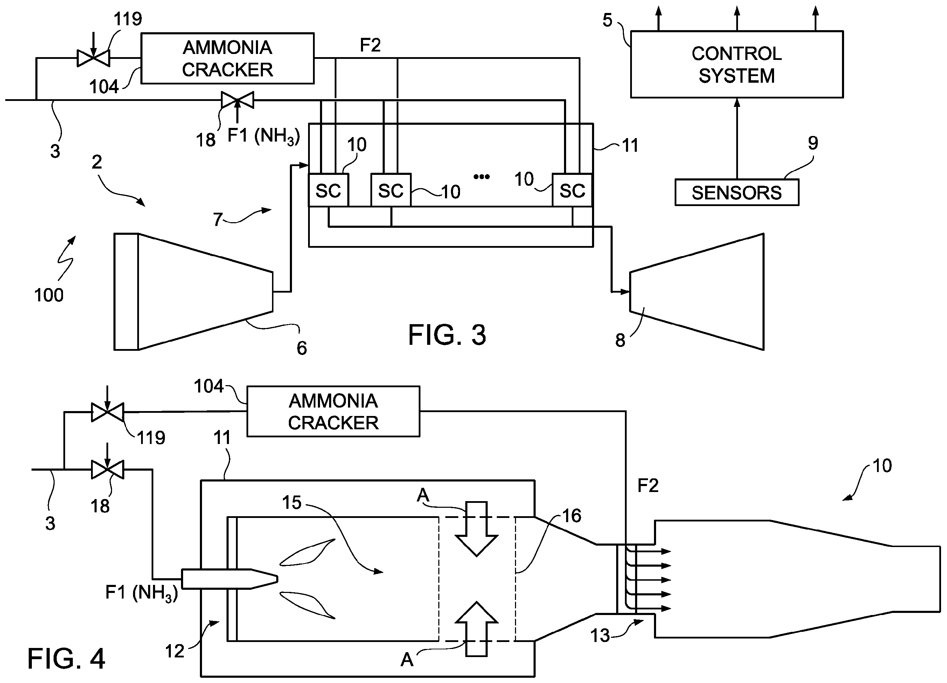

According to another embodiment of the invention, shown in figures 3 and 4, a gas-turbine plant 100 comprises the gas turbine engine 2, the (first and here sole) fuel supply line 3, which supplies the first fuel F1 containing molecular ammonia and, in one embodiment, only ammonia, and the control system 5 as already described. Additionally, the gas-turbine plant 100 comprises a reactor or ammonia cracker 104 coupled to the fuel source 3 and configured to decompose ammonia into molecular nitrogen N₂ and molecular hydrogen H₂.

The gas turbine engine 2 comprises the compressor 6, the combustor assembly 7 and the expansion section or turbine 8. The combustor assembly 7 comprises the sequential combustors 10, each one with a respective first combustor stage 12 and a respective second combustor stage 13.

The first combustor stage 12 is coupled to the fuel supply line 3 to receive a first fraction of an overall supply of the first fuel F1. The supply of the first fuel F1 is controlled by the control system 5 to have a stoichiometric or sub-stoichiometric first air/fuel mixture M1 in the first combustor stage 12.

The ammonia cracker 104 is coupled to the fuel source 3 to receive a second fraction of the first fuel F1 from the supply line 3 and to the second combustor stage 13 to supply the second fuel F2. Specifically, the ammonia cracker 104 decomposes the molecular ammonia contained in the received flow of the first fuel F into molecular nitrogen N₂ and molecular hydrogen H₂. The ammonia cracker 104 supplies the decomposed ammonia to the second combustor stage 13 as the second fuel F2 to form the second air/fuel mixture M2 with exhaust from the first combustor stage 12 and dilution air A provided by the mixer 16.

The supply of the second fuel F2 to the second combustor stage 13 is controlled by the control system 5 through second stage fuel actuator 119 so that the second air/fuel mixture M2 is over-stoichiometric.

Again, the control system 5 also controls at least one of a temperature of a first stage flame in the first combustor stage 12, an equivalence ratio of the first stage and a fuel massflow of the first stage and the feed of the dilution air A through the mixer 16 so that the second air/fuel mixture M2 is auto-ignited in the second combustor stage 13 and a flame front position of the second combustor stage 13 is adjusted as desired.

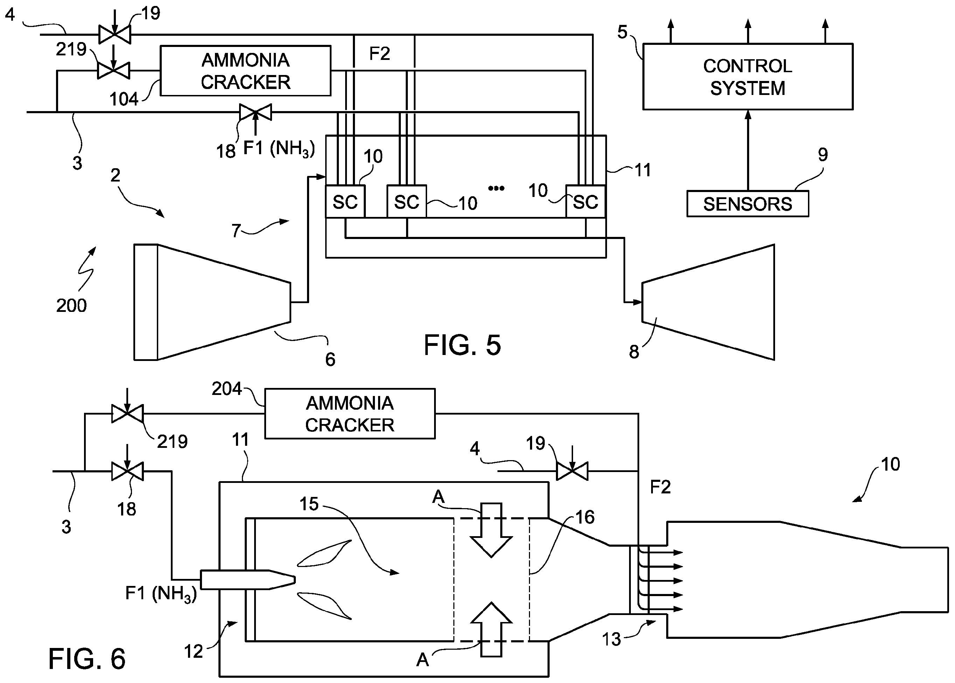

According to another embodiment, shown in figures 5 and 6, a gas-turbine plant 200 comprises the gas turbine engine 2, the first fuel supply line 3, which supplies the first fuel F1 containing molecular ammonia, the second supply line 4, which supplies a fuel flow containing hydrogen, methane ethane, propane, butane, pentane or any other gaseous fuel, the control system 5 and, in addition, a reactor or ammonia cracker 204 coupled to the fuel source 3 and configured to decompose ammonia into molecular nitrogen N₂ and molecular hydrogen H₂.

The second combustor stage 13 may receive the second fuel F2 either from the second supply line 4 or from the ammonia cracker 204, or even from both. The control system 5 controls the supply of the second fuel F2 through second stage fuel actuators 19, 219 so that the second air/fuel mixture M2 is over-stoichiometric, is auto-ignited in the second combustor stage 13 and a flame front position of the second combustor stage 13 is adjusted as desired.

Finally, it is clear that modifications and variants may be made to the method and to the power plant described herein without departing from the scope of the present invention, as defined in the appended claims.

## Claims

1. A method for controlling a sequential combustor (10) of a gas turbine engine, the sequential combustor (10) comprising a first combustor stage (12) and a second combustor stage (13);
the method comprising supplying the first combustor stage (12) with a first air/fuel mixture (M1) and supplying the second combustor stage (13) with a second air/fuel mixture (M2);
the first air/fuel mixture (M1) contains ammonia and is stoichiometric or sub-stoichiometric;
**characterized by** supplying dilution air into the sequential combustor (10) between the first combustor stage (12) and the second combustor stage (13), at a location where unburnt ammonia from the first combustor stage (12) is decomposed.

2. The method according to claim 1, wherein a fuel content of the first air/fuel mixture (M1) is entirely ammonia.

3. The method according to claim 1 or 2, comprising decomposing additional ammonia outside the sequential combustor.

4. The method according to claim 3, comprising supplying the decomposed additional ammonia to the second combustor stage (13) in the second air/fuel mixture (M2).

5. The method according to any one of the preceding claims, wherein the second air/fuel mixture (M2) contains at least one of hydrogen, methane, ethane, propane, butane and pentane and any other gaseous fuel.

6. The method according to any one of the preceding claims, wherein the second air/fuel mixture (M2) is over-stoichiometric.

7. The method according to any one of the preceding claims, comprising controlling at least one of a temperature of a first stage flame, an equivalence ratio of the first stage and a fuel massflow of the first stage so that the second air/fuel mixture (M2) is auto-ignited in the second combustor stage (13).

8. A gas turbine power plant comprising:
a gas turbine engine, provided with a sequential combustor (10) having a first combustor stage (12) and a second combustor stage (13);
a first fuel source (3) coupled to the first combustor stage (12) and providing a first fuel (F1);
a second fuel source (4; 104; 4, 204) coupled to the second combustor stage (13) and providing a second fuel (F2);
a control system (5), configured to control fuel supply to the first combustor stage (12) and to the second combustor stage (13), whereby a first air/fuel mixture (M1) containing the first fuel (F1) is supplied to the first combustor stage (12) and a second air/fuel mixture (M2) containing the second fuel (F2) is supplied to the second combustor stage (13);
wherein the first fuel (F1) contains ammonia and the control system (5) is configured to control supply of the first fuel (F1) so that the first air/fuel mixture (M1) is stoichiometric or sub-stoichiometric;
**characterized by** a mixer (16) configured to add dilution air along a flow path between the first combustor stage (12) and the second combustor stage (13), at a location where unburnt ammonia from the first combustor stage (12) is decomposed.

9. The gas turbine power plant according to claim 8, wherein a content of the first air/fuel mixture (M1) is entirely ammonia.

10. The gas turbine power plant according to any one of claims 8 or 9, wherein the second fuel source (104; 204) comprises a reactor coupled to the first fuel source (3) to receive the first fuel (F1) and configured to decompose ammonia in the first fuel (F1) and to feed the decomposed ammonia to the second combustor stage (13) as the second fuel (F2).

11. The gas turbine power plant according to any one of claims 8 to 10, wherein the second fuel (F2) contains at least one of hydrogen, methane, ethane, propane, butane and pentane and any other gaseous fuel.

12. The gas turbine power plant according to any one of claims 8 to 11, wherein the second air/fuel mixture (M2) is over-stoichiometric.

13. The gas turbine power plant according to any one of the preceding claims 8 to 12, wherein the control system (5) is configured to control at least one of a temperature of a first combustor stage (12) flame, an equivalence ratio of the first stage and a fuel massflow of the first stage so that the second air/fuel mixture (M2) is auto-ignited in the second combustor stage (13).

## Patentansprüche

1. Verfahren zum Steuern eines sequentiellen Brenners (10) einer Gasturbinenmaschine, wobei der sequentielle Brenner (10) eine erste Brennerstufe (12) und eine zweite Brennerstufe (13) umfasst;
wobei das Verfahren das Zuführen eines ersten Luft/Brennstoff-Gemisches (M1) zu der ersten Brennerstufe (12) und das Zuführen eines zweiten Luft/Brennstoff-Gemisches (M2) zu der zweiten Brennerstufe (13) umfasst;
wobei das erste Luft/Brennstoff-Gemisch (M1) Ammoniak enthält und stöchiometrisch oder unterstöchiometrisch ist;
**gekennzeichnet durch** ein Zuführen von Verdünnungsluft in den sequentiellen Brenner (10) zwischen der ersten Brennerstufe (12) und der zweiten Brennerstufe (13) an einer Stelle, an der unverbranntes Ammoniak aus der ersten Brennerstufe (12) zersetzt wird.

2. Verfahren nach Anspruch 1, wobei ein Brennstoffanteil des ersten Luft/Brennstoff-Gemisches (M1) vollständig aus Ammoniak besteht.

3. Verfahren nach Anspruch 1 oder 2, das die Zersetzung von zusätzlichem Ammoniak außerhalb des sequentiellen Brenners umfasst.

4. Verfahren nach Anspruch 3, das das Zuführen des zersetzten zusätzlichen Ammoniaks zur zweiten Brennerstufe (13) im zweiten Luft/Brennstoff-Gemisch (M2) umfasst.

5. Verfahren nach einem der vorangehenden Ansprüche, wobei das zweite Luft/Brennstoff-Gemisch (M2) wenigstens eines enthält von Wasserstoff, Methan, Ethan, Propan, Butan und Pentan und jedem anderen gasförmigen Brennstoff.

6. Verfahren nach einem der vorangehenden Ansprüche, wobei das zweite Luft/Brennstoff-Gemisch (M2) überstöchiometrisch ist.

7. Verfahren nach einem der vorangehenden Ansprüche, das das Steuern/Regeln wenigstens eines von einer Temperatur einer Flamme der ersten Stufe, einem Äquivalenzverhältnis der ersten Stufe und einem Brennstoffmassenstrom der ersten Stufe umfasst, so dass das zweite Luft/Brennstoff-Gemisch (M2) in der zweiten Brennerstufe (13) selbsttätig gezündet wird.

8. Gasturbinenkraftwerk, umfassend:
eine Gasturbinenmaschine, die mit einem sequentiellen Brenner (10) versehen ist, der eine erste Brennerstufe (12) und eine zweite Brennerstufe (13) aufweist;
einer ersten Brennstoffquelle (3), die an die erste Brennerstufe (12) gekoppelt ist und einen ersten Brennstoff (F1) bereitstellt;
eine zweite Brennstoffquelle (4; 104; 4, 204), die mit der zweiten Brennerstufe (13) gekoppelt ist und einen zweiten Brennstoff (F2) bereitstellt;
ein Steuer/Regelsystem (5), das dazu konfiguriert ist, die Brennstoffzufuhr zu der ersten Brennerstufe (12) und zu der zweiten Brennerstufe (13) zu steuern/regeln, wobei ein erstes Luft/Brennstoff-Gemisch (M1), das den ersten Brennstoff (F1) enthält, der ersten Brennerstufe (12) zugeführt wird und ein zweites Luft/BrennstoffGemisch (M2), das den zweiten Brennstoff (F2) enthält, der zweiten Brennerstufe (13) zugeführt wird;
wobei der erste Brennstoff (F1) Ammoniak enthält und das Steuer/Regelsystem (5) dazu konfiguriert ist, die Zuführung des ersten Brennstoffs (F1) so zu steuern, dass das erste Luft/Brennstoff-Gemisch (M1) stöchiometrisch oder unterstöchiometrisch ist;
**gekennzeichnet durch** einen Mischer (16), der dazu konfiguriert ist, Verdünnungsluft entlang eines Strömungspfads zwischen der ersten Brennerstufe (12) und der zweiten Brennerstufe (13) an einer Stelle hinzuzufügen, an der unverbranntes Ammoniak aus der ersten Brennerstufe (12) zersetzt wird.

9. Gasturbinenkraftwerk nach Anspruch 8, wobei ein Anteil des ersten Luft/Brennstoff-Gemisches (M1) vollständig aus Ammoniak besteht.

10. Gasturbinenkraftwerk nach einem der Ansprüche 8 oder 9, wobei die zweite Brennstoffquelle (104; 204) einen Reaktor umfasst, der mit der ersten Brennstoffquelle (3) gekoppelt ist, um den ersten Brennstoff (F1) aufzunehmen, und dazu konfiguriert ist, Ammoniak in dem ersten Brennstoff (F1) zu zersetzen und das zersetzte Ammoniak der zweiten Brennerstufe (13) als den zweiten Brennstoff (F2) zuzuführen.

11. Gasturbinenkraftwerk nach einem der Ansprüche 8 bis 10, wobei der zweite Brennstoff (F2) wenigstens eines enthält von Wasserstoff, Methan, Ethan, Propan, Butan und Pentan und jedem anderen gasförmigen Brennstoff.

12. Gasturbinenkraftwerk nach einem der Ansprüche 8 bis 11, wobei das zweite Luft/Brennstoff-Gemisch (M2) überstöchiometrisch ist.

13. Gasturbinenkraftwerk nach einem der vorangehenden Ansprüche 8 bis 12, wobei das Steuer/Regelsystem (5) dazu konfiguriert ist, wenigstens eines von einer Temperatur einer Flamme der ersten Brennerstufe (12), einem Äquivalenzverhältnis der ersten Stufe und einem Brennstoffmassenstrom der ersten Stufe so zu steuern/regeln, dass das zweite Luft/Brennstoff-Gemisch (M2) in der zweiten Brennerstufe (13) selbsttätig gezündet wird.

## Revendications

1. Procédé de commande d'une chambre de combustion séquentielle (10) d'un moteur à turbine à gaz, la chambre de combustion séquentielle (10) comprenant un premier étage de chambre de combustion (12) et un deuxième étage de chambre de combustion (13) ;
le procédé comprenant l'alimentation du premier étage de chambre de combustion (12) avec un premier mélange air/combustible (M1) et l'alimentation du deuxième étage de chambre de combustion (13) avec un deuxième mélange air/combustible (M2) ;
le premier mélange air/combustible (M1) contenant de l'ammoniac et étant stœchiométrique ou sous-stœchiométrique ;
**caractérisé par** la fourniture d'air de dilution à la chambre de combustion séquentielle (10) entre le premier étage de chambre de combustion (12) et le deuxième étage de chambre de combustion (13), à un emplacement auquel l'ammoniac non brûlé issu du premier étage de chambre de combustion (12) est décomposé.

2. Procédé selon la revendication 1, dans lequel une teneur en combustible du premier mélange air/combustible (M1) est entièrement de l'ammoniac.

3. Procédé selon la revendication 1 ou 2, comprenant la décomposition d'ammoniac supplémentaire à l'extérieur de la chambre de combustion séquentielle.

4. Procédé selon la revendication 3, comprenant la fourniture de l'ammoniac supplémentaire décomposé au deuxième étage de chambre de combustion (13) dans le deuxième mélange air/combustible (M2).

5. Procédé selon l'une quelconque des revendications précédentes, dans lequel le deuxième mélange air/combustible (M2) contient au moins l'un d'hydrogène, de méthane, d'éthane, de propane, de butane et de pentane et tout autre combustible gazeux.

6. Procédé selon l'une quelconque des revendications précédentes, dans lequel le deuxième mélange air/combustible (M2) est sur-stœchiométrique.

7. Procédé selon l'une quelconque des revendications précédentes, comprenant la régulation d'au moins l'un(e) d'une température de la flamme d'un premier étage, d'un rapport d'équivalence du premier étage et d'un débit massique de combustible du premier étage de sorte que le deuxième mélange air/combustible (M2) soit auto-allumé dans le deuxième étage de chambre de combustion (13).

8. Centrale à turbine à gaz comprenant :
un moteur à turbine à gaz, équipé d'une chambre de combustion séquentielle (10) ayant un premier étage de chambre de combustion (12) et un deuxième étage de chambre de combustion (13) ;
une première source de combustible (3) couplée au premier étage de chambre de combustion (12) et qui fournit un premier combustible (F1) ;
une deuxième source de combustible (4 ; 104 ; 4, 204) couplée au deuxième étage de chambre de combustion (13) et qui fournit un deuxième combustible (F2) ;
un système de commande (5), configuré pour commander l'alimentation en combustible du premier étage de chambre de combustion (12) et du deuxième étage de chambre de combustion (13), moyennant quoi un premier mélange air/combustible (M1) contenant le premier combustible (F1) est fourni au premier étage de chambre de combustion (12) et un deuxième mélange air/combustible (M2) contenant le deuxième combustible (F2) est fourni au deuxième étage de chambre de combustion (13) ;
dans laquelle le premier combustible (F1) contient de l'ammoniac et le système de commande (5) est configuré pour commander l'alimentation en premier combustible (F1) de sorte que le premier mélange air/combustible (M1) soit stœchiométrique ou sous-stœchiométrique ;
**caractérisée par** un mélangeur (16) configuré pour ajouter de l'air de dilution le long d'un trajet d'écoulement entre le premier étage de chambre de combustion (12) et le deuxième étage de chambre de combustion (13), à un emplacement auquel l'ammoniac non brûlé issu du premier étage de chambre de combustion (12) est décomposé.

9. Centrale à turbine à gaz selon la revendication 8, dans laquelle une teneur en premier mélange air/combustible (M1) est entièrement de l'ammoniac.

10. Centrale à turbine à gaz selon l'une quelconque des revendications 8 ou 9, dans laquelle la deuxième source de combustible (104 ; 204) comprend un réacteur couplé à la première source de combustible (3) afin de recevoir le premier combustible (F1) et configuré pour décomposer l'ammoniac dans le premier combustible (F1) et pour fournir l'ammoniac décomposé au deuxième étage de chambre de combustion (13) en guise de deuxième combustible (F2).

11. Centrale à turbine à gaz selon l'une quelconque des revendications 8 à 10, dans laquelle le deuxième combustible (F2) contient au moins l'un d'hydrogène, de méthane, d'éthane, de propane, de butane et de pentane et tout autre combustible gazeux.

12. Centrale à turbine à gaz selon l'une quelconque des revendications 8 à 11, dans laquelle le deuxième mélange air/combustible (M2) est sur-stœchiométrique.

13. Centrale à turbine à gaz selon l'une quelconque des revendications précédentes 8 à 12, dans laquelle le système de commande (5) est configuré pour réguler au moins l'un(e) d'une température de la flamme d'un premier étage de chambre de combustion (12), d'un rapport d'équivalence du premier étage et d'un débit massique de combustible du premier étage de sorte que le deuxième mélange air/combustible (M2) soit auto-allumé dans le deuxième étage de chambre de combustion (13).
